# EUROPEAN PATENT APPLICATION

(11) **EP 4 596 278 A1**
(43) Date of publication of application: **06.08.2025**
(21) Application number: 23887848.2
(22) Date of filing: 31.10.2023
(51) Int. Cl.: B60J 1/00, B60J 1/10

(54) **GLASS ASSEMBLY AND VEHICLE**

(30) Priority: 09.11.2022 CN 202211395268
(71) Applicant: Fuyao Glass Industry Group Co., Ltd., Fuqing, Fujian 350300 (CN)
(72) Inventor: ZHANG, Ke, Fuqing, Fujian 350300 (CN); CHEN, Ronglin, Fuqing, Fujian 350300 (CN); WANG, Liqiang, Fuqing, Fujian 350300 (CN); LIN, Qiming, Fuqing, Fujian 350300 (CN); ZENG, Dong, Fuqing, Fujian 350300 (CN); YU, Changhe, Fuqing, Fujian 350300 (CN)
(74) Representative: Mewburn Ellis LLP
(86) International application number: PCT/CN2023/128040
(87) International publication number: WO 2024/099158

(57) **Abstract**

A glass assembly and a vehicle are provided in the present disclosure. The glass assembly includes glass and a fixing member. The fixing member is fixedly connected to at least one of all outer peripheral sides of the glass. The fixing member includes a fixing portion and an elastic portion. The fixing portion defines a groove and an insert opening in communication with the groove. The insert opening is configured for insertion of an insertable member into the groove. The elastic portion is accommodated in the groove and protrudes from a sidewall of the groove defined by the fixing portion. The elastic portion is configured to abut against the insertable member inserted into the groove. The glass is configured to be fixed to the insertable member. The operation of fixing the glass assembly provided in the present disclosure to the insertable member is simple and efficient.

## Description

### CROSS-REFERENCE TO RELATED APPLICATION(S)

This application claims priority to Chinese Patent Application No. 202211395268.0, filed with the China National Intellectual Property Administration on November 09, 2022 and entitled "GLASS ASSEMBLY AND VEHICLE", the entire disclosure of which is hereby incorporated by reference.

### TECHNICAL FIELD

This disclosure relates to the field of vehicle glass mounting, and in particular, to a glass assembly and a vehicle.

### BACKGROUND

Fixed window glass, such as triangular glass, on the vehicle needs to be fixed to a vehicle body metal plate. Generally, the fixed window glass is fixed to the vehicle body metal plate by a vehicle body glue or metal nail posts. However, it takes a long time to apply and cure the vehicle body glue, which affects mounting efficiency. The locking of the metal nail posts needs to be aligned with locking nuts, which is difficult to operate and also affects the mounting efficiency.

### SUMMARY

In a first aspect, the present disclosure provides a glass assembly. The glass assembly includes glass and a fixing member. The fixing member is fixedly connected to at least one of all outer peripheral sides of the glass. The fixing member includes a fixing portion and an elastic portion. The fixing portion defines a groove and an insert opening in communication with the groove. The insert opening is configured for insertion of an insertable member through the insert opening into the groove. The elastic portion is accommodated in the groove and protrudes from a sidewall of the groove defined by the fixing portion. The elastic portion is configured to abut against the insertable member inserted into the groove. The glass is configured to be fixed to the insertable member.

The fixing member is fixedly connected to at least three of the outer peripheral sides of the glass.

An orientation of the insert opening at each of the at least three of the outer peripheral sides of the glass is identical to a thickness direction of the glass.

An orientation of the insert opening at one of the at least three of the outer peripheral sides of the glass is perpendicular to a thickness direction of the glass. An orientation of the insert opening at each of the rest of the at least three of the outer peripheral sides of the glass is identical to the thickness direction of the glass.

The fixing member is fixedly connected to one of all the outer peripheral sides of the glass. An orientation of the insert opening is perpendicular to a thickness direction of the glass. The glass assembly further includes an auxiliary member. The auxiliary member is fixedly connected to another of all the peripheral sides of the glass, configured to assist fixation of the glass to a part of the insertable member, and further configured to be fixed to another part of the insertable member.

The elastic portion is implemented as at least one elastic portion. The fixing member includes multiple elastic portions. The multiple elastic portions protrude from at least one side of the sidewall of the groove defined by the fixing portion.

Each of the at least one elastic portion includes an elastic sub-portion and an abutting sub-portion. The elastic sub-portion has one end connected to the sidewall of the groove defined by the fixing portion. The abutting sub-portion is connected to the other end of the elastic sub-portion away from the sidewall the groove, and inclined away from the insert opening.

The at least one elastic portion protrudes from one side of the sidewall of the groove defined by the fixing portion. The fixing portion includes a fixing body and a protruding sub-portion. The fixing body defines the groove and the insert opening. The protruding sub-portion protrudes from the sidewall of the groove defined by the fixing portion, and faces the at least one elastic portion.

The fixing member further includes a support portion. The support portion is embedded in the fixing body and annularly disposed around the groove to support the fixing portion.

The support portion includes a support body and an epitaxial sub-portion. The support body is annularly disposed around the groove. The epitaxial sub-portion is connected to the support body at at least one side of the support body away from the groove.

The glass assembly further includes an injection mold. The injection mold is connected between the glass and the fixing member.

The glass assembly further includes a trim. The trim is configured to be mounted at one side of the injection mold exposed to an outer side of a vehicle body when the glass assembly is mounted on the vehicle body.

The fixing portion has a hardness of 80° ± 5° Shore A (SHA). The elastic portion has a hardness of 65° ± 5° SHA.

The present disclosure provides a glass assembly. The glass assembly includes the glass and the fixing member. The fixing member is fixedly connected to at least one of all the outer peripheral sides of the glass. The fixing member can clamp the insertable member by a clamping force generated by the elastic portion and the fixing portion together after the insertable member is inserted into the groove, so as to get the insertable member stuck, so that the fixing member is fixed to the insertable member. Therefore, the glass can be quickly fixed to the insertable member by pressing the fixing portion towards the insertable member, and the operation is simple and efficiency is high. In addition, the glass does not need to be glued and mounted with metal nail posts, so that the glass has a relatively large visible region and the overall look and feel of the glass is improved. Furthermore, the glass can be quickly and non-destructively disassembled from the insertable member, which is conducive for maintenance and replacement of the glass. Therefore, the operation of fixing the glass assembly provided in the present disclosure to the insertable member is simple and efficient.

In a second aspect, the present disclosure further provides a vehicle. The vehicle includes a vehicle body and the glass assembly in the first aspect. The glass assembly is mounted on the vehicle body.

The present disclosure provides a vehicle. The glass assembly of the vehicle is mounted on at the fixed window of the vehicle body, and the glass assembly is fixedly connected to the insertable member on the vehicle body. The glass can be quickly fixed to the vehicle body by pressing the fixing portion towards the vehicle body, and the operation is simple and efficiency is high. In addition, the glass does not need to be glued and mounted with metal nail posts, so that the glass has a relatively large visible region, the overall look and feel of the glass is improved, and thus the overall look and feel of the vehicle is improved. Moreover, the glass can be quickly and non-destructively disassembled from the vehicle body, which is conducive for maintenance and replacement of the glass.

### BRIEF DESCRIPTION OF THE DRAWINGS

To describe the technical solutions in embodiments of the present disclosure more clearly, the accompanying drawings for use in implementations are briefly described below. Apparently, the accompanying drawings in the following description show merely some implementations of the present disclosure, and those of ordinary skill in the art may obtain other accompanying drawings from these accompanying drawings without creative effort.
FIG. 1 is a schematic structural view of a glass assembly provided in an implementation of the present disclosure mounted at an insertable member.
FIG. 2 is a schematic cross-sectional view of FIG. 1, taken along line A-A.
FIG. 3 is a schematic structural view of a glass assembly provided in another implementation of the present disclosure mounted at an insertable member.
FIG. 4 is a schematic cross-sectional view of FIG. 3, taken along line B-B.
FIG. 5 is a schematic cross-sectional view of FIG. 3, taken along line C-C.
FIG. 6 is a schematic structural view of a glass assembly provided in yet another implementation of the present disclosure mounted at an insertable member.
FIG. 7 is a schematic cross-sectional view of FIG. 6, taken along line D-D.
FIG. 8 is a schematic structural view of a fixing member provided in an implementation of the present disclosure.
FIG. 9 is a schematic structural view of a fixing member provided in another implementation of the present disclosure.
FIG. 10 is a schematic structural view of a fixing member provided in yet another implementation of the present disclosure.
FIG. 11 is a schematic view of a connection of glass and a fixing member provided in an implementation of the present disclosure.
FIG. 12 is a schematic structural view of a vehicle provided in an implementation of the present disclosure.

Reference signs: vehicle 1; glass assembly 10; glass 11; fixing member 12; fixing portion 121; groove 1211; insert opening 1212; fixed body 1213; protruding sub-portion 1214; elastic portion 122; elastic sub-portion 1221; abutting sub-portion 1222; support portion 123; support body 1231; epitaxial sub-portion 1232; auxiliary member 13; injection mold 14; trim 15; A vehicle body 20; To be inserted 21.

### DETAILED DESCRIPTION

The following will clearly and completely describe technical solutions of embodiments of the present disclosure with reference to the accompanying drawings. Apparently, embodiments described herein are merely some embodiments, rather than all embodiments. Based on the embodiments of the present disclosure, all other embodiments obtained by those of ordinary skill in the art without creative effort shall fall within the protection scope of the present disclosure.

The terms such as "first", "second", etc., in the specification, the claims, and the above accompanying drawings of the present disclosure are used to distinguish different objects, rather than describing a particular order. In addition, the terms "including", "comprising", and "having" as well as variations thereof are intended to cover non-exclusive inclusion. For example, a process, method, system, product, or device including a series of steps or units is not limited to the listed steps or units, on the contrary, it can optionally include other steps or units that are not listed; alternatively, other steps or units inherent to the process, method, product, or device can be included either.

The term "embodiment" or "implementation" referred to herein means that particular features, structures, or properties described in conjunction with implementations may be defined in at least one embodiment of the present disclosure. The phrase "embodiment" appearing in various places in the specification does not necessarily refer to the same embodiment or an independent/alternative embodiment that is mutually exclusive with other embodiments. Those skilled in the art will understand expressly and implicitly that an embodiment described in the present disclosure may be combined with other embodiments.

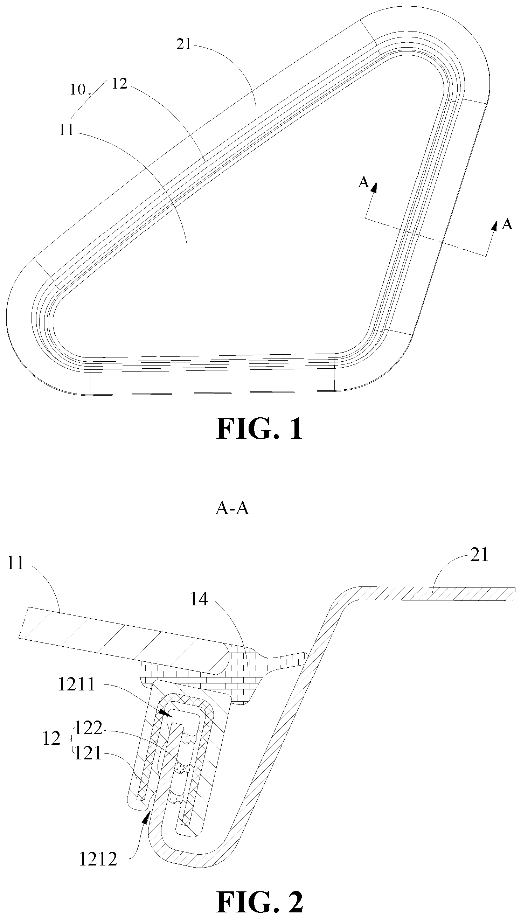

A glass assembly 10 is provided in an implementation of the present disclosure. Reference can be made to FIG. 1 and FIG. 2, where FIG. 1 is a schematic structural view of a glass assembly provided in an implementation of the present disclosure mounted at an insertable member, and FIG. 2 is a schematic cross-sectional view of FIG. 1, taken along line A-A. In this implementation, the glass assembly 10 includes glass 11 and a fixing member 12. The fixing member 12 is fixedly connected to at least one of all outer peripheral sides of the glass 11. The fixing member 12 includes a fixing portion 121 and an elastic portion 122. The fixing portion 121 defines a groove 1211 and an insert opening 1212 in communication with the groove 1211. The insert opening 1212 is configured for insertion of the insertable member 21 into the groove 1211. The elastic portion 122 is accommodated in the groove 1211 and protrudes from a sidewall of the groove 1211 defined by the fixing portion 121. The elastic portion 122 is configured to abut against the insertable member 21 inserted into the groove 1211. The glass 11 is configured to be fixed to the insertable member 21.

In this implementation, the glass assembly 10 is configured to be fixed to the insertable member 21. Specifically, the glass assembly 10 is configured to be fixed to a vehicle body sheet metal.

In the related art, the fixed window glass, such as triangular glass, on the vehicle 1 needs to be fixed to the vehicle body sheet metal. Generally, the fixed window glass is fixed to the vehicle body sheet metal by a vehicle body glue and metal nail posts. However, it takes a long time to apply and cure the vehicle body glue, which affects mounting efficiency. The locking of the metal nail posts needs to be aligned with locking nuts, which is difficult to operate and also affects the mounting efficiency. In addition, when the fixed window glass 11 is fixed to the vehicle body sheet metal by metal nail posts, due to the influence of the sheet metal and the sealing performance, the metal nail posts are generally positioned at the inner side of the gluing region, and the printed edge area needs to be increased. As a result, the visible region of the fixed window becomes smaller and the overall look and feel is affected.

Compared with the related art, in this implementation, the glass 11 is fixed window glass. The glass 11 is fixed to the insertable member 21 by the fixing member 12. The fixing member 12 is fixedly connected to at least one of all outer peripheral sides of the glass 11. The glass 11 can be quickly fixed to the insertable member 21 by pressing the fixing member 12 towards the insertable member 21, so that the operation is simple, the mounting speed is fast, and the mounting efficiency is high.

Specifically, the fixing member 12 includes the fixing portion 121 and the elastic portion 122. The fixing portion 121 defined the groove 1211 and the insert opening 1212 in communication with the groove 1211. The insertable member 21 can enter the groove 1211 through the insert opening 1212, so that the insertable member 21 is inserted into the fixing portion 121. In addition, the elastic portion 122 is accommodated in the groove 1211, and protrudes from the sidewall of the groove 1211 defined by the fixing portion 121. After the insertable member 21 is inserted into the fixing portion 121, the elastic portion 122 elastically abuts against the side surface of the insertable member 21 to fix the glass 11 to the insertable member 21 together with the fixing portion 121.

In this implementation, the elastic portion 122 is accommodated in the groove 1211, so that the insertable member 21 need to squeeze the elastic portion 122 to be inserted into the fixing portion 121. After the insertable member 21 is inserted into the fixing portion 121, since the elastic portion 122 elastically abuts against the insertable member 21, the elastic portion 122 and the fixing portion 121 jointly generate a clamping force on the insertable member 21, to prevent the fixing portion 121 from falling off from the insertable member 21. Therefore, the fixing member 121 is firmly fixed to the insertable member 21, so that the glass 11 is fixed to the insertable member 21. The groove 1211 has a "U"-shaped structure, which can improve the fitting degree and assembly force between the fixing portion 121 and the insertable member 21.

Optionally, the outer surface of the elastic portion 122 has a relatively large roughness, to increase the frictional force between the elastic portion 122 and the insertable member 21. Therefore, the fixing portion 121 can be further prevent from falling off from the insertable member 21, thereby further improving the stability of fixing the glass 11 to the insertable member 21.

In addition, since the glass 11 can be fixed to the insertable member 21 without gluing or mounting metal nail posts, the glass 11 does not need to retain a gluing region and a metal nail post mounting region, and the fixing member 12 can be simply mounted at the outer peripheral side of the glass 11. Therefore, the glass 11 has a relatively large visible region, the plane width of the sheet metal is reduced, and the overall look and feel of the glass 11 is improved, thereby improving the appearance effect of the entire vehicle, and providing customers with a different visual experience.

Moreover, since the glass 11 can be fixed to the insertable member 21 without gluing or installing a metal nail post, when the glass 11 is disassembled, the glass 11 can be quickly disassembled from the insertable member 21 only by applying a force in a direction opposite to the mounting direction of the glass 11. Therefore, the disassembly is convenient and will not cause secondary damage to the glass 11 and the insertable member 21, which is conducive to the maintenance and replacement of the glass 11.

Furthermore, the glass assembly 10 can provide a new mounting method for the customer and improve the customer experience.

In summary, the implementation of the present disclosure provides the glass assembly 10. The glass assembly 10 includes the glass 11 and the fixing member 12. The fixing member 12 is fixedly connected to at least one of all the outer peripheral sides of the glass 11. The fixing member 12 can clamp the insertable member 21 by the clamping force generated by the elastic portion 122 and the fixing portion 121 together after the insertable member 21 is inserted into the groove 1211, so as to get the insertable member 21 stuck, so that the fixing member 12 is fixed to the insertable member 21. Therefore, the glass 11 can be quickly fixed to the insertable member 21 by pressing the fixing portion 121 towards the insertable member 21, and the operation is simple and efficiency is high. In addition, the glass 11 does not need to be glued and mounted with metal nail posts, so that the glass 11 has a relatively large visible region and the overall look and feel of the glass 11 is improved. Furthermore, the glass 11 can be quickly and non-destructively disassembled from the insertable member 21, which is conducive for maintenance and replacement of the glass 11. Therefore, the operation of fixing the glass assembly 10 provided in the present disclosure to the insertable member 21 is simple and efficient.

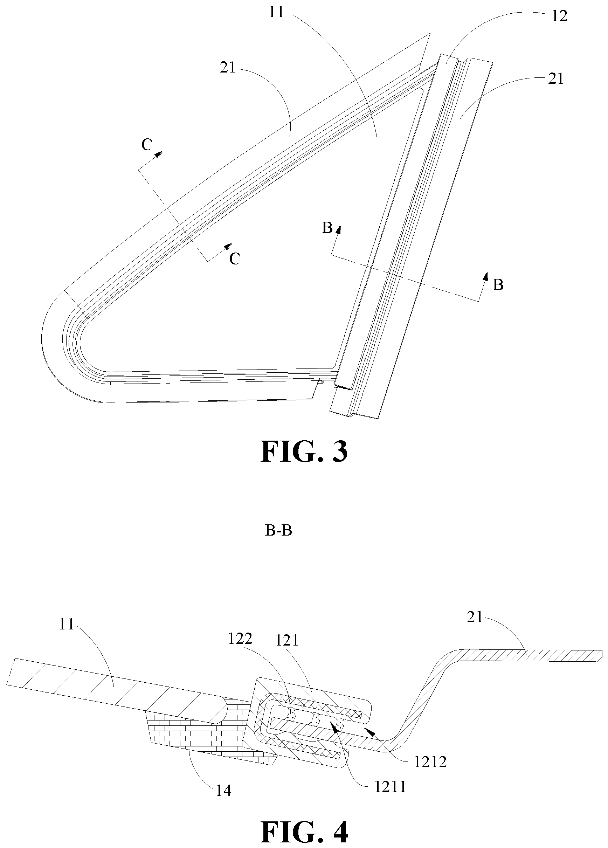

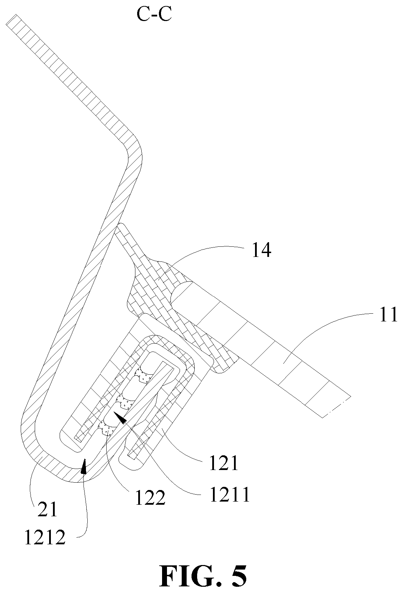

Reference can be made to FIG. 1, FIG. 2, FIG. 3, FIG. 4, and FIG. 5 together, where FIG. 3 is a schematic structural view of a glass assembly provided in another implementation of the present disclosure mounted at an insertable member, FIG. 4 is a schematic cross-sectional view of FIG. 3, taken along line B-B, and FIG. 5 is a schematic cross-sectional view of FIG. 3, taken along line C-C. In this implementation, the fixing member 12 is fixedly connected to at least three of the outer peripheral sides of the glass 11, to improve the stability of fixing the glass 11 to the insertable member 21.

Specifically, in an implementation (referring to FIG. 1 and FIG. 2), an orientation of the insert opening 1212 at each of the at least three of the outer peripheral sides of the glass 11 is identical to a thickness direction of the glass 11.

In this implementation, the glass 11 is schematically described as having three outer peripheral sides. FIG. 2 is a schematic cross-sectional view of one outer peripheral side of the glass 11, and it can be understood that the cross-sectional structure of the other two outer peripheral sides of the glass 11 is identical to the structure shown in FIG. 2. Since the orientation of the insert opening 1212 is identical to the thickness direction of the glass 11, in the process of fixing the glass 11 to the insertable member 21, the glass 11 can be fixed to the insertable member 21 by the fixing member 12 only by aligning the insert opening 1212 with the insertable member 21 and then pressing the glass 11 towards the thickness direction of the glass 11.

In another implementation (referring to FIG. 3, FIG. 4, and FIG. 5), an orientation of the insert opening 1212 at one of the at least three of the outer peripheral sides of the glass 11 is perpendicular to the thickness direction of the glass 11, and an orientation of the insert opening at each of the rest of all the outer peripheral sides of the glass 11 is identical to the thickness direction of the glass 11.

In this implementation, the glass 11 is schematically described as having three outer peripheral sides. In the process of fixing the glass 11 to the insertable member 21, part of the insert opening 1212 at one outer peripheral side, which has an orientation perpendicular to the thickness direction of the glass 11, is aligned with part of the insertable member 21, and a force is pressed towards the part of the insertable member 21, so as to fix the glass 11 to the part of the insertable member 21; and then the other part of the insert opening 1212 at the other two outer peripheral sides, which has an orientation identical to the thickness direction of the glass 11, is aligned with the other part of the insertable member 21, and a force is pressed towards the thickness direction of the glass 11, so as to fix the glass 11 to the other part of the insertable member 21, thereby fixing the glass 11 to the insertable member 21. Since the insert opening 1212 has two different orientations at all the outer peripheral sides of the glass 11, it is necessary to sequentially apply the force in two different directions to disassemble the glass 11 from the insertable member 21, so that the glass 11 can be more stably fixed to the insertable member 21. It can be understood that, the above process of fixing the glass 11 to the insertable member 21 is merely a schematic description, and the order in which the fixing members 12 provided on different outer peripheral sides of the glass 11 are fixed to the insertable member 21 is not limited.

In another implementation, the orientation of the insert opening 1212 is not limited to being identical to the thickness direction of the glass 11 or perpendicular to the thickness direction of the glass 11, and the orientation of the insert opening 1212 may be another direction so that an angle between the orientation of the insert opening 1212 and the surface of the glass 11 is an acute angle or an obtuse angle, which is specifically designed according to actual mounting requirements. Alternatively, when the glass 11 has four or more outer peripheral sides, the orientation of the insert opening 1212 at each of two or more of all the outer peripheral sides of the glass 11 is perpendicular to the thickness direction of the glass 11, and the orientation of the insert opening 1212 at each of the other of all the outer peripheral sides of the glass 11 is identical to the thickness direction of the glass 11.

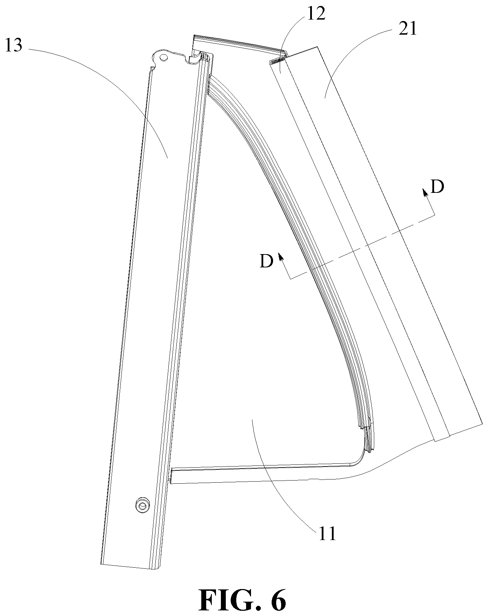

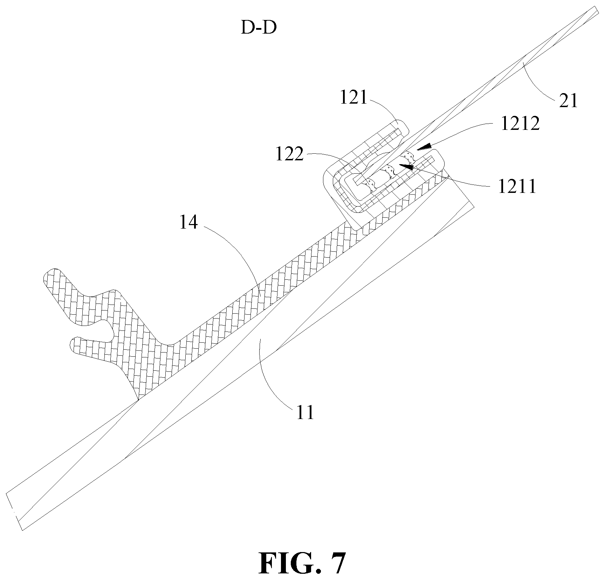

Reference can be made to FIG. 6 and FIG. 7 together, where FIG. 6 is a schematic structural view of a glass assembly provided in yet another implementation of the present disclosure mounted at an insertable member, and FIG. 7 is a schematic cross-sectional view of FIG. 6, taken along line D-D. In this implementation, the fixing member 12 is fixedly connected to one of all the outer peripheral sides of the glass 11, and the orientation of the insert opening 1212 is perpendicular to the thickness direction of the glass 11. The glass assembly 10 further includes an auxiliary member 13. The auxiliary member 13 is fixedly connected to another of all the outer peripheral sides of the glass 11. The auxiliary member 13 is configured to assist fixation of the glass 11 to a part of the insertable member 21. The auxiliary member 13 is further configured to be fixed to another part of the insertable member 21.

In this implementation, the auxiliary member 13 and the fixing member 12 are disposed at different sides of all the outer peripheral sides of the glass 11. The glass 11 is fixed to the part of the insertable member 21 by the fixing member 12 at one side of the glass 11, and the glass 11 is fixed to the other part of the insertable member 21 by the auxiliary member 13 at the other side of the glass 11, so that the glass 11 is fixed to the insertable member 21. The auxiliary member 13 is made of a metal material, such as stainless steel, aluminum alloy, etc., so as to improve the stability of the glass 11 fixed to the insertable member 21 and provide support.

Optionally, the auxiliary member 13 is a guide rail. The guide rail defines a fixing groove for fit and connection with one side of the glass 11 where the fixing member 12 is not provided. Both ends of the guide rail are fixed to the insertable member 21 by bolts.

Optionally, the glass 11 is fixed to the insertable member 21 by the fixing member 12 at one side of the glass 11, and the glass 11 can be fixedly connected to the vehicle body sheet metal by integrally molded or the additionally provided fixing member 12 at the other side of the glass 11.

Optionally, the fixing member 12 may be mounted at multiple outer peripheral sides of the glass 11 to further enhance the strength of fixing the glass 11 to the insertable member.

It is to be noted that in any one of the above implementations, when the orientation of the insert opening 1212 is perpendicular to the glass 11, the fixing material 12 and the glass 11 are laminated in the thickness direction of the glass 11, or the fixing material 12 and the glass 11 are laminated in a direction perpendicular to the surface of the glass 11.

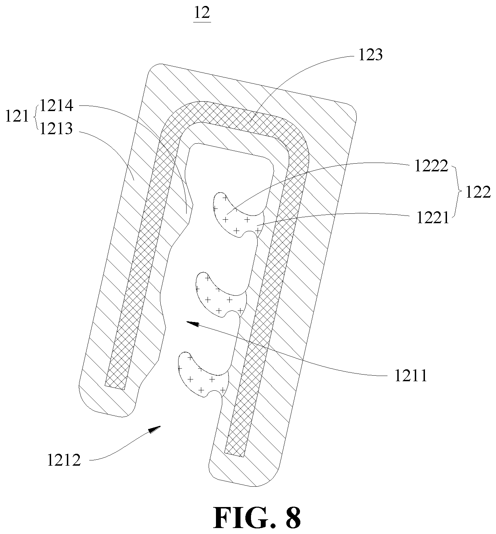

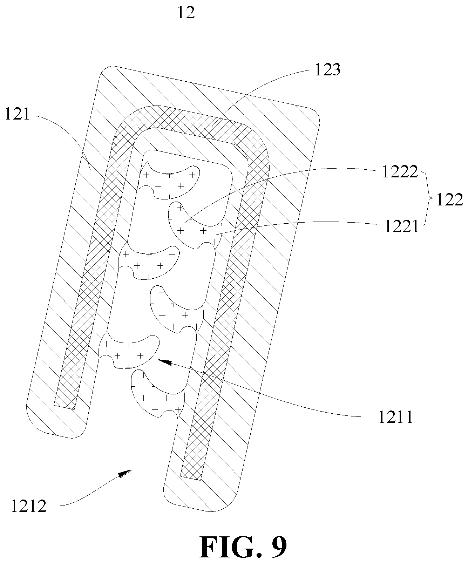

Reference can be made to FIG. 8 and FIG. 9, where FIG. 8 is a schematic structural view of a fixing member provided in an implementation of the present disclosure, and FIG. 9 is a schematic structural view of a fixing member provided in another implementation of the present disclosure. In this implementation, the elastic portion 122 is implemented as at least one elastic portion 122. The fixing member 12 includes multiple elastic portions 122. The multiple elastic portions 122 protrude from at least on one side of the sidewall of the groove 1211 defined by the fixing portion 121.

When the fixing member 12 includes the multiple elastic portions 122, in an implementation, the multiple elastic portions 122 protrude from the same side of the sidewall of the groove 1211 defined by the fixing member 121, so that after the insertable member 21 is inserted into the groove 1211, the insertable member 21 elastically abut against the multiple elastic portions 122 at one side of the insertable member 21, and the insertable member 21 abuts against the fixing member 121 at the other opposite side of the insertable member 21. In another implementation, the multiple elastic portions 122 protrude from two sides of the sidewall of the groove 1211 defined by the fixing portion 121, so that after the insertable member 21 is inserted into the groove 1211, the multiple elastic portions 122 elastically abut against two opposite sides of the insertable member 21, so as to increase the friction force between the insertable member 21 and each of the multiple elastic portions 122.

Referring to FIG. 8 and FIG. 9 again, in this implementation, the elastic portion 122 includes an elastic sub-portion 1221 and an abutting sub-portion 1222. One end of the elastic sub-portion 1221 is connected to the sidewall of the groove 1211 defined by the fixing portion 121. The abutting sub-portion 1222 is connected to the other end of the elastic sub-portion 1221 away from the sidewall of the groove 1211, and the abutting sub-portion 1222 is inclined away from the insert opening 1212.

In this implementation, the abutting sub-portion 1222 is inclined away from the insert opening 1212, so that the elastic portion 122 is "barb"-shaped. After the insertable member 21 is inserted into the groove 1211, the elastic portion 122 abuts against the insertable member 21, so that it is possible to further form frictional resistance against the insertable member 21 being separated from the groove 1211, thereby improving the stability of fixing the glass 11 to the insertable member 21.

Optionally, the surface of the abutting sub-portion 1222 for abutting against the insertable member 21 has raised or recessed microstructures, so as to increase the roughness of the surface of the abutting sub-portion 1222 abutting against the insertable member 21, thereby further forming frictional resistance against the insertable member 21 from being separated from the groove 1211, and further improving the stability of fixing the glass 11 to the insertable member 21.

Referring to FIG. 8 again, in this implementation, the at least one elastic portion 122 protrudes from one side of the sidewall of the groove 1211 defined by the fixing portion 121, the fixing portion 121 includes a fixing body 1213 and a protruding sub-portion 1214. The fixing body 1213 defines the groove 1211 and the insert opening 1212. The protruding sub-portion 1214 protrudes from the sidewall of the groove 1211 defined by the fixing body 1213, and the protruding sub-portion 1214 faces the elastic portion 122.

In this implementation, the protruding sub-portion 1214 faces the elastic portion 122, so that after the insertable member 21 is inserted into the groove 1211, the elastic portion 122 abuts against one side of the insertable member 21, and the protruding sub-portion 1214 abuts against the other opposite side opposite of the insertable member 21, thereby further forming frictional resistance against the insertable member 21 being separated from the groove 1211, and further improving the stability of fixing the glass 11 to the insertable member 21.

Referring to FIG. 8 again, in this implementation, the fixing member 12 further includes a support portion 123. The support portion 123 is embedded in the fixing body 1213 and is annularly disposed around the groove 1211 to support the fixing portion 121.

In this implementation, the support portion 123 is embedded in the fixing body 1213 to support the fixing portion 121, thereby improving the strength of the fixing member 12 being in fit and connection with the insertable member 21, and further improving the stability of fixing the glass 11 to the insertable member 21.

Optionally, the support portion 123 is made of metal, which may be, but is not limited to, stainless steel, iron, aluminum alloy, etc.

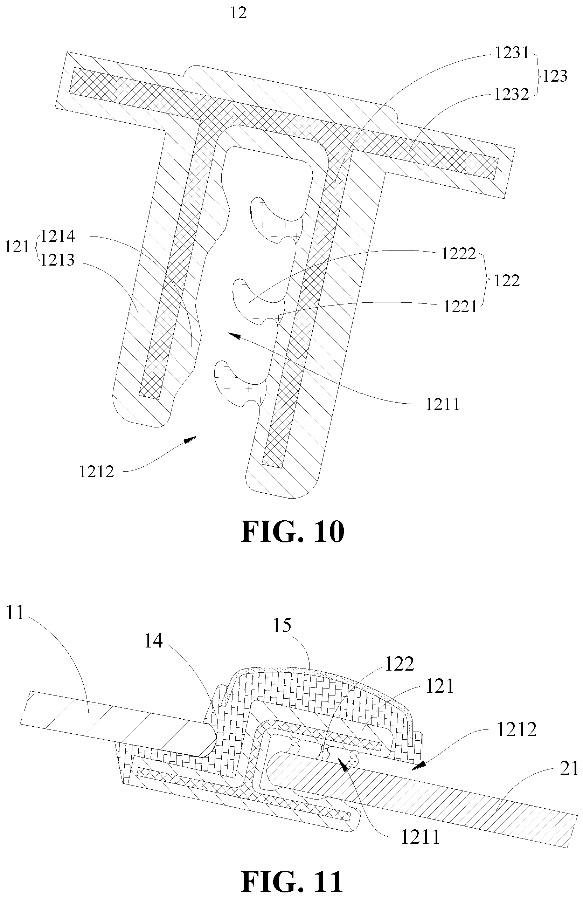

Reference can be made to FIG. 10, which is a schematic structural view of a fixing member provided in yet another implementation of the present disclosure. In this implementation, the support portion 123 includes a support body 1231 and an epitaxial sub-portion 1232. The support body 1231 is annularly disposed around the groove 1211. The epitaxial sub-portion 1232 is connected to the support body 1231 at at least one side of the support body 1231 away from the groove 1211.

In this implementation, the support portion 123 includes the support body 1231 annularly disposed around the groove 1211 and the epitaxial sub-portion 1232 extending away from the groove 1211. The epitaxial sub-portion 1232 can extend in any direction away from the groove 1211, and is specifically designed according to practical applications. In addition, the epitaxial sub-portion 1232 is also embedded in the fixing body 1213 to further support the fixing portion 121, thereby improving the strength of the fixing member 12 in fit and connection with the insertable member 21, and further improving the stability of fixing the glass 11 to the insertable member 21.

Reference can be made to FIG. 11, which is a schematic view of a connection of glass and a fixing member provided in an implementation of the present disclosure. In this implementation, the glass assembly 10 further includes an injection mold 14. The injection mold 14 is connected between the glass 11 and the fixing member 12.

In this implementation, the injection mold 14 is connected between the glass 11 and the fixing member 12 by injection molding, thereby enhancing the connection strength between the glass 11 and the fixing member 12.

Optionally, the injection mold 14 is integrally formed with the fixing member 12.

Optionally, the injection mold 14 may be, but is not limited to, polyvinyl chloride (PVC), thermoplastic elastomer (TPE), or the like.

It is to be noted that in any one of the above implementations, the injection mold 14 can be connected between the glass 11 and the fixing member 12 by injection molding. Only one implementation is adopted in FIG. 11 for schematic description.

Referring to FIG. 11 again, in this implementation, the glass assembly 10 further includes a trim 15. The trim 15 is configured to be mounted at one side of the injection mold 14 exposed to an outer side of the vehicle body 20 when the glass assembly 10 is mounted on the vehicle body 20.

In this implementation, the trim 15 is configured to decorate the injection mold 14. Specifically, the trim 15 is mounted on a surface of the injection mold 14 exposed on the outer side of the vehicle body 20, thereby improving the ornamentality of the glass assembly 10.

Optionally, the trim 15 may be, but is not limited to, a colored ribbon, an aluminum strip, a light strip, or the like.

In addition, in any one of the above implementations, the fixing portion 121 has a hardness of 80° ± 5° Shore A (SHA). The elastic portion 122 has a hardness of 65° ± 5° SHA.

The fixing portion 121 with a relatively high hardness is adopted to improve the strength of the fixing member 12, and the elastic portion 122 with a relatively low hardness is adopted to facilitate insertion of the insertable member 21 into the groove 1211. In addition, the elastic portion 122 with a relatively low hardness can prevent the glass assembly 10 from being reversely withdrawn, and can reduce noise, and can also shorten the mounting time, thereby improving the operating efficiency.

Optionally, the fixing portion 121 is made of PVC, TPE, or the like, and is prepared by extrusion molding.

Optionally, the elastic portion 122 is made of PVC, TPE, or the like, and is prepared by extrusion molding.

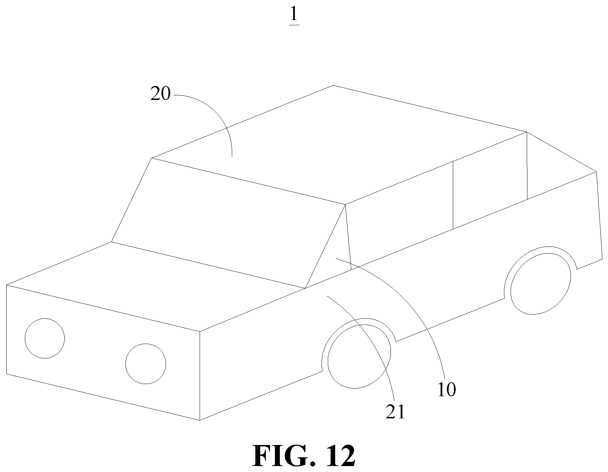

Reference can be made to FIG. 12, FIG. is a schematic structural view of a vehicle provided in an implementation of the present disclosure. In this implementation, the vehicle 1 includes a vehicle body 20 and the glass assembly 10 of any one of the above implementations. The glass assembly 10 is mounted on the vehicle body 20.

In this implementation, the glass assembly 10 is mounted on the vehicle body 20. Specifically, the glass assembly 10 is mounted at a fixed window of the vehicle body 20, and the glass assembly 10 is fixedly connected to the insertable member 21 on the vehicle body 20. The insertable member 21 may be the body sheet metal or sliding window glass. The glass 11 can be quickly fixed to the vehicle body 20 by pressing the fixing portion 121 towards the vehicle body 20, so that the operation is simple and efficient. In addition, the glass 11 does not need to be glued or mounted with metal nail posts, so that the glass 11 has a relatively large visible region, and the overall look and feel of the glass 11 is improved, thereby improving the overall look and feel of the vehicle 1. Furthermore, the glass 11 can be quickly and non-destructively disassembled from the vehicle body 20, which is conducive for maintenance and replacement of the glass 11.

Although the embodiments of the present disclosure have been shown and described above, it can be understood that the above embodiments are exemplary and cannot be understood as limitations to the present disclosure. Those of ordinary skill in the art can change, amend, replace, and modify the above embodiments within the scope of the present disclosure, and these modifications and improvements are also regarded as the protection scope of the present disclosure.

## Claims

1. A glass assembly, comprising:
glass; and
a fixing member, fixedly connected to at least one of all outer peripheral sides of the glass, wherein the fixing member comprises a fixing portion and an elastic portion, the fixing portion defines a groove and an insert opening in communication with the groove, the insert opening is configured for insertion of an insertable member through the insert opening into the groove, the elastic portion is accommodated in the groove and protrudes from a sidewall of the groove defined by the fixing portion, the elastic portion is configured to abut against the insertable member inserted into the groove, and the glass is configured to be fixed to the insertable member.

2. The glass assembly of claim 1, wherein the fixing member is fixedly connected to at least three of the outer peripheral sides of the glass.

3. The glass assembly of claim 2, wherein an orientation of the insert opening at each of the at least three of the outer peripheral sides of the glass is identical to a thickness direction of the glass.

4. The glass assembly of claim 2, wherein an orientation of the insert opening at one of the at least three of the outer peripheral sides of the glass is perpendicular to a thickness direction of the glass, and an orientation of the insert opening at each of the rest of the at least three of the outer peripheral sides of the glass is identical to the thickness direction of the glass.

5. The glass assembly of claim 1, wherein the fixing member is fixedly connected to one of all the outer peripheral sides of the glass, and an orientation of the insert opening is perpendicular to a thickness direction of the glass; and the glass assembly further comprises:
an auxiliary member, fixedly connected to another of all the peripheral sides of the glass, configured to assist fixation of the glass to a part of the insertable member, and further configured to be fixed to another part of the insertable member.

6. The glass assembly of claim 1, wherein the elastic portion is implemented as at least one elastic portion, the fixing member comprises a plurality of elastic portions, and the plurality of elastic portions protrude from at least one side of the sidewall of the groove defined by the fixing portion.

7. The glass assembly of claim 6, wherein each of the at least one elastic portion comprises:
an elastic sub-portion, having one end connected to the sidewall of the groove defined by the fixing portion; and
an abutting sub-portion, connected to the other end of the elastic sub-portion away from the sidewall of the groove, and inclined away from the insert opening.

8. The glass assembly of claim 6, wherein the at least one elastic portion protrudes from one side of the sidewall of the groove defined by the fixing portion, and the fixing portion comprises:
a fixing body, defining the groove and the insert opening; and
a protruding sub-portion, protruding from the sidewall of the groove defined by the fixing portion, and faces the at least one elastic portion.

9. The glass assembly of any one of claims 1 to 8, wherein the fixing member further comprises:
a support portion, embedded in the fixing body and annularly disposed around the groove to support the fixing portion.

10. The glass assembly of claim 9, wherein the support portion comprises:
a support body, annularly disposed around the groove; and
an epitaxial sub-portion, connected to the support body at at least one side of the support body away from the groove.

11. The glass assembly of claim 1, further comprising:
an injection mold, connected between the glass and the fixing member.

12. The glass assembly of claim 11, further comprising:
a trim, configured to be mounted at one side of the injection mold exposed to an outer side of a vehicle body when the glass assembly is mounted on the vehicle body.

13. The glass assembly of claim 1, wherein the fixing portion has a hardness of 80° ± 5° Shore A (SHA), and the elastic portion has a hardness of 65° ± 5° SHA.

14. A vehicle, comprising:
a vehicle body; and
the glass assembly of any one of claims 1 to 13, wherein the glass assembly is mounted on the vehicle body.
